# EUROPÄISCHE PATENTANMELDUNG

(11) **EP 3 135 435 A1**
(43) Veröffentlichungstag der Anmeldung: **01.03.2017**
(21) Anmeldenummer: 15182262.4
(22) Anmeldetag: 25.08.2015
(51) Int. Cl.: B25B 31/00

(54) **SETZWERKZEUG**

(71) Anmelder: HILTI Aktiengesellschaft, 9494 Schaan (LI)
(72) Erfinder: Foser, Roland, 9491 Ruggell (LI); Meindorfer, Tanja, 9470 Buchs (CH); Schreiber, Gerald, 6800 Feldkirch (AT)
(74) Vertreter: Hilti Aktiengesellschaft Corporate Intellectual Property

(57) **Zusammenfassung**

Die Erfindung betrifft ein Setzwerkzeug mit einer zu einer vorderen Seite des Setzwerkzeugs hin offenen Ankerstangenaufnahme (31) und einer zu einer rückwärtigen Seite des Setzwerkzeugs hin offenen Bohreraufnahme (41). Erfindungsgemäss ist vorgesehen, dass das Setzwerkzeug einen Durchgang (3) aufweist, durch den eine in der Ankerstangenaufnahme aufgenommene Ankerstange (10) mit einem in der Bohreraufnahme aufgenommenen Bohrer (20) unmittelbar axial schlagend beaufschlagbar ist. Die Erfindung betrifft auch eine Befestigungsanordnung mit einem solchen Setzwerkzeug.

## Beschreibung

Die Erfindung betrifft ein Setzwerkzeug, insbesondere zum schlagenden Eintreiben einer Ankerstange in ein Substrat, gemäss dem Oberbegriff des Anspruchs 1. Ein solches Setzwerkzeug ist ausgestattet mit einer zu einer vorderen Seite des Setzwerkzeugs hin offenen Ankerstangenaufnahme, und einer zu einer rückwärtigen Seite des Setzwerkzeugs hin offenen Bohreraufnahme. Die Erfindung betrifft auch eine Befestigungsanordnung mit einem solchen Setzwerkzeug.

Die EP 1281481 A2 beschreibt ein Setzwerkzeug für einen Bolzenanker mit einem Hohlschaft zum Aufnehmen eines Bohrers, wobei sich an den Hohlschaft ein massiver Schaft zum schlagenden Beaufschlagen des Bolzenankers anschliesst. Nach EP 1281481 A2 weist das Setzwerkzeug eine Aufnahme für den Bolzenanker ohne Mutter sowie eine zweite Aufnahme für den Bolzenanker mit aufgeschraubter Mutter auf.

Die DE 102012221114 B3 beschreibt ein Setzwerkzeug bestehend aus einem ersten Teil zum Eintreiben eines Einschlagankers und einem auf das erste Teil aufsetzbaren zweiten Teil zum Bohren eines Bohrlochs für den Einschlaganker.

Weitere Setzwerkzeuge gehen aus der EP 2754534 A2, der US 2015167715 A1, der DE 102006000362 A1, der EP 1162036 A2, der US 6125519 A und der US 4745831 A hervor,

Aufgabe der Erfindung ist es, ein Setzwerkzeug für Ankerstangen und eine Befestigungsanordnung mit einem solchen Setzwerkzeug zur Verfügung zu stellen, wobei bei besonders einfachem und wirtschaftlichem Aufbau und guter Handhabbarkeit eine besonders effiziente Impulsübertragung auf die Ankerstange möglich ist und dabei eine besonders gute Verschleissbeständigkeit gegeben ist.

Die Aufgabe wird erfindungsgemäss durch ein Setzwerkzeug mit den Merkmalen des Anspruchs 1 und eine Befestigungsanordnung mit einem solchen Setzwerkzeug mit den Merkmalen des Anspruchs 10 gelöst. Bevorzugte Ausführungsformen sind in den jeweils abhängigen Ansprüchen angegeben.

Ein erfindungsgemässes Setzwerkzeug ist dadurch gekennzeichnet, dass es einen Durchgang aufweist, durch den eine in der Ankerstangenaufnahme aufgenommene Ankerstange mit einem in der Bohreraufnahme aufgenommenen Bohrer unmittelbar axial schlagend beaufschlagbar ist.

Ein Grundgedanke der Erfindung kann darin gesehen werden, das Setzwerkzeug für eine direkte Impulsübertragung vom Bohrer auf die Ankerstange zu konfigurieren, das heisst das Setzwerkzeug bildet eine Führung für den Bohrer, welche die Spitze des Bohrers direkt auf den Kopf der Ankerstange lenkt. Demgemäss zeichnet sich die Erfindung durch einen Durchgang aus, durch den hindurch die Spitze des in der Bohreraufnahme angeordneten Bohrers unmittelbar auf die rückwärtige Stirnseite der Ankerstange wirken kann. Hierdurch ist in besonders einfacher Weise ein besonders effizienter Kraftfluss gegeben, bei dem die Impulse des Bohrers und der den Bohrer antreibenden Maschine besonders verlustarm auf die Ankerstange übertragen werden können. Da darüber hinaus beim erfindungsgemässen Setzwerkzeug der Bohrer auf eine bei jedem Setzvorgang wechselnde Anschlagfläche, nämlich auf die rückwärtige Stirnseite der Ankerstange, schlägt, und nicht wie bei einer mittelbaren Kraftübertragung immer auf dasselbe Zwischenstück, wird einem vorzeitigen Verschleiss des Setzwerkzeugs oder gar einem unerwünschten Einarbeiten des Bohrers in das Setzwerkzeug in besonders einfacher Art und Weise entgegengewirkt. Da der Kopf der Ankerstange, das heisst ihr rückwärtiger Bereich, bei der Fertigung der Ankerstange häufig kaltverfestigt werden, ist in der Regel hierbei keine Beeinträchtigung der bestimmungsgemässen Funktion der Ankerstange zu erwarten.

Die Ankerstangenaufnahme dient zum Aufnehmen, vorzugsweise axialen Einstecken, einer Ankerstange und die Bohreraufnahme zum Aufnehmen, vorzugsweise axialen Einstecken, eines Bohrers.

Das Setzwerkzeug kann insbesondere zum schlagenden Eintreiben der Ankerstange in eine Bohrung dienen. Beispielsweise kann die Ankerstange Teil eines Expansionsankers, vorzugsweise eines Expansionsankers des Bolzentyps sein. Ein Expansionsanker kann sich insbesondere dadurch auszeichnen, dass er ein Spreizelement, beispielsweise eine Spreizhülse, aufweist, welche von einem an der Ankerstange angeordneten Expansionskörper radial nach aussen gedrängt wird, wenn der Expansionskörper axial relativ zum Expansionselement versetzt wird. Insbesondere kann die Ankerstange ein Aussengewinde aufweisen. Die Ankerstange, die vorzugsweise metallisch ist, kann auf ihrer vom Bohrer zu beaufschlagenden rückwärtigen Stirnseite auch eine Schutzkappe aufweisen, beispielsweise aus Kunststoff. Im Durchgang des Setzwerkzeugs kann auch eine vom Bohrer durchstossbare Membran angeordnet sein.

Soweit von der Axialrichtung oder der Radialrichtung die Rede ist, kann sich dies insbesondere auf die Längsachse der Bohreraufnahme, die Längsachse der Ankerstangenaufnahme, die Längsachse des Bohrers, die Längsachse der Ankerstange und/oder eine gemeinsame Längsachse beziehen.

Der Bohrer kann vorzugsweise ein Steinbohrer sein. Der Bohrer kann insbesondere ein Wendelbohrer sein und/oder weist vorzugsweise einen zylindrischen Schaft auf, insbesondere mit zumindest einer Wendelnut, wobei der Schaft in die Bohreraufnahme einführbar ist. Zweckmässigerweise kann der Bohrer eine Hartmetallspitze aufweisen.

Besonders vorteilhaft ist es, dass das Setzwerkzeug eine Bohrerhülse aufweist, in welcher die Bohreraufnahme ausgebildet ist. Eine solche Hülse ermöglicht eine besonders effektive Führung des Bohrers. Vorzugsweise weist die Bohrerhülse, insbesondere in ihrem vorderen Endbereich, eine Innenquerschnittsverengung als axialen Anschlag für den in der Bohreraufnahme aufgenommenen Bohrer und/oder als Führung für ein rückwärtiges Ende der Ankerstange auf. Hierdurch kann einerseits in besonders einfacher Art und Weise eine besonders zuverlässige Führung der Ankerstange relativ zum Bohrer genau in dem Bereich realisiert werden, in dem die Impulse vom Bohrer auf die Ankerstange übertragen werden, so dass die Betriebszuverlässigkeit noch weiter gesteigert werden kann. Andererseits kann hierdurch in besonders einfacher Art und Weise die axiale Position des Setzwerkzeugs relativ zum Bohrer definiert werden. Die Innenquerschnittsverengung kann beispielsweise durch einen oder mehrere Stege oder durch eine Einschnürung gebildet sein. Die Innenquerschnittsverengung ist insbesondere bei Blickrichtung in Axialrichtung erkennbar, wohingegen bei anderen Blickrichtungen sogar eine Querschnittserweiterung gegeben sein kann. Im Betrieb des Setzwerkzeuges kann die Spitze des Bohrers zumindest zeitweise an der Innenquerschnittsverengung anliegen. Um entsprechend der Erfindung die in der Ankerstangenaufnahme aufgenommene Ankerstange mit dem in der Bohreraufnahme aufgenommenen Bohrer unmittelbar axial beaufschlagen zu können, ist in der Innenquerschnittsverengung ein freier Restquerschnitt gegeben, welcher den erfindungsgemässen Durchgang zumindest mit definiert, und durch welchen der Bohrer direkt auf die Ankerstange wirken kann. Die Innenquerschnittsverengung kann, insbesondere auf ihrer dem Bohrer zugewandten Seite rotationssymmetrisch, bei Drehung um jeden beliebigen Winkel, ausgebildet sein, so dass der Bohrer keinen bevorzugten Angriffspunkt hat. Dies kann für das Verschleissverhalten positiv sein. Alternativ kann die Innenquerschnittsverengung auch separate Vorsprünge aufweisen, die beispielsweise für eine besonders wirksam Kopplung mit dem Bohrer und/oder der Ankerstange dienen können.

Eine weitere bevorzugte Ausgestaltung des Setzwerkzeugs liegt darin, dass es ein Mutternhalteelement aufweist, in dem eine Mutternaufnahme zum drehfesten Aufnehmen einer auf die Ankerstange aufgeschraubten Mutter ausgebildet ist. Hierdurch kann eine unerwünschte Rotation der Mutter, ausgelöst durch Vibrationen der den Bohrer antreibenden Maschine, in besonders einfacher Weise vermieden werden und zugleich die Führung der Ankerstange noch weiter verbessert werden. Das Mutternhaltelement kann als Griffelement ausgebildet oder/und mit einem Griffelement gekoppelt sein.

Beispielsweise kann die Mutternaufnahme eine Innenmehrkantstruktur, insbesondere eine Innensechskantstruktur, aufweisen. Diese Innenmehrkantstruktur kann mit einer Aussenkontur der Mutter korrespondieren und somit die Mutter formschlüssig gegen eine Drehung sichern. Alternativ oder zusätzlich kann die Mutternaufnahme aber auch eine Reibfläche aufweisen, welche die Mutter reibschlüssig drehfest sichert. Diese Reibfläche kann insbesondere am Boden der Mutternaufnahme angeordnet sein. Weiter zusätzlich oder alternativ kann die Mutternaufnahme elastische Teile aufweisen, welche sich zum drehfesten Sichern an die Form der Mutter anpassen.

Zweckmässigerweise weist die Mutternaufnahme einen Boden auf, welcher einen axialen Anschlag für die Mutter bildet. Hierdurch kann in besonders einfacher Art und Weise die axiale Position des Setzwerkzeugs relativ zur Ankerstange definiert werden. Insbesondere kann die Ankerstangenaufnahme im Boden der Mutternaufnahme ausgebildet sein. Beispielsweise kann die Ankerstangenaufnahme durch eine, vorzugsweise zentrale, Bohrung im Boden der Mutternaufnahme gebildet sein. Die Mutternaufnahme ist zweckmässigerweise topfförmig und/oder ihr Boden ringförmig ausgebildet.

Weiterhin ist es zweckmässig, dass das Mutternhalteelement und die Bohrerhülse axial zueinander verschiebbar aneinander befestigt sind. Hierdurch kann ein besonders robustes und zugleich zuverlässiges Setzwerkzeug erhalten werden. Insbesondere kann auch sichergestellt werden, dass der Bohrer während des Setzvorgangs besonders zuverlässigen Kontakt mit der Ankerstange hat.

Gemäss einer weiteren vorteilhaften Ausgestaltung kann vorgesehen sein, dass das Mutternhalteelement und die Bohrerhülse ineinanderschiebbar, insbesondere axial ineinanderschiebbar sind. Hierdurch kann ein besonders robustes, kompaktes und zuverlässiges Setzwerkzeug erhalten werden. Insbesondere kann die die Bohrerhülse im Inneren des Mutternhalteelements angeordnet sein. Diese Ausführungsform kann besonders dann vorteilhaft sein, wenn die Mutter durchmessergrösser als der Bohrer ist, was insbesondere dann der Fall sein kann, der Bohrer und die Ankerstange etwa denselben Durchmesser aufweisen. Insbesondere in diesem Fall kann diese Ausführungsform eine nochmals kompaktere und zugleich robuste und zuverlässige Ausgestaltung des Setzwerkzeugs ermöglichen.

Eine weitere bevorzugte Ausgestaltung der Erfindung liegt darin, dass das Setzwerkzeug einen Faltenbalg aufweist, welcher einerseits, insbesondere rückseitig, an der Bohrerhülse und andererseits, insbesondere vorderseitig, am Mutternhalteelement, mittelbar oder unmittelbar, angeordnet ist. Unter einem Faltenbalg kann in fachüblicher Weise insbesondere ein elastisch gefalteter Schlauch verstanden werden. Vorzugsweise umgibt der Faltenbalg die Bohrerhülse zumindest bereichsweise und/oder kann der Faltenbalg den Verschiebemechanismus vor Fremdeinflüssen schützen. Durch den elastischen Aufbau des Faltenbalgs kann gewährleistet werden, dass die Mutter an verschiedenen Positionen längs der Ankerstange zuverlässig vom Mutternhalteelement gehalten werden kann. Die Wand des Faltenbalgs kann beispielsweise eine sinusartige Wellenstruktur oder eine Dreieckswellenstruktur oder andersartige Formen aufweisen.

Insbesondere kann vorgesehen sein, dass sich der Faltenbalg einerseits an der Bohrerhülse und andererseits am Mutternhalteelement abstützt, und/oder dass der Faltenbalg eine Druckfeder bildet, welche beim Ineinanderschieben von Mutternhalteelement und Bohrerhülse Energie speichert. Demgemäss kann der Faltenbalg das Mutternhaltelement, insbesondere den Boden der Mutternaufnahme, axial gegen die Mutter pressen, was die Betriebszuverlässigkeit noch weiter erhöhen kann.

Vorzugsweise in einem rückwärtigen Bereich der Bohrerhülse kann an der Bohrerhülse bevorzugt eine Ringschulter vorgesehen sein, an der sich der Faltenbalg abstützt. Hierdurch kann ein besonders robustes und zuverlässiges Setzwerkzeug erhalten werden. Die Bohrerhülse kann auch mehrteilig ausgeführt sein.

Eine weitere zweckmässige Weiterbildung der Erfindung liegt darin, dass die Ankerstangenaufnahme und die Bohreraufnahme koaxial angeordnet sind. Hierdurch kann eine besonders wirksame Kraft- und/oder Impulsübertragung zwischen Bohrer und Ankerstange erhalten werden, da der Kraftfluss über die Mittelachse des Bohrers übertragen wird.

Die Erfindung betrifft auch eine Befestigungsanordnung mit einem erfindungsgemässen Setzwerkzeug, einer Ankerstange, welche in der Ankerstangenaufnahme des Setzwerkzeugs angeordnet ist, und einem Bohrer, welcher in der Bohreraufnahme des Setzwerkzeugs angeordnet ist. Dies entspricht der betriebsbereiten Konfiguration des Setzwerkzeugs.

Insbesondere kann vorgesehen sein, dass der Bohrer und die Ankerstange zumindest annähernd durchmessergleich sind. Gemäss dieser Ausführungsform kann der Bohrer, der zum Erstellen des Bohrlochs für die Ankerstange dient, auch zum Betrieb des Setzwerkzeugs für dieselbe Ankerstange dienen, was den Setzvorgang noch weiter vereinfachen kann.

Merkmale, die im Zusammenhang mit der erfindungsgemässen Befestigungsanordnung erläutert werden, können auch beim erfindungsgemässen Setzwerkzeug zum Einsatz kommen, so wie auch umgekehrt Merkmale, die im Zusammenhang mit dem erfindungsgemässen Setzwerkzeug erläutert werden, auch bei der erfindungsgemässen Befestigungsanordnung zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine Längsschnittsansicht einer Ausführungsform einer erfindungsgemässen Befestigungsanordnung mit einem erfindungsgemässen Setzwerkzeug, vor dem Setzvorgang;
- Figur 2:: die Befestigungsanordnung aus Figur 1 in Längsschnittsansicht mit eingefedertem Faltenbalg und Kontakt zwischen der Spitze des Bohrers und der Ankerstange beim Setzvorgang; und
- Figur 3:: eine Längsschnitts-Detailansicht einer erfindungsgemässen Befestigungsanordnung gemäss einer leicht modifizierten weiteren Ausführungsform, vor dem Setzvorgang.

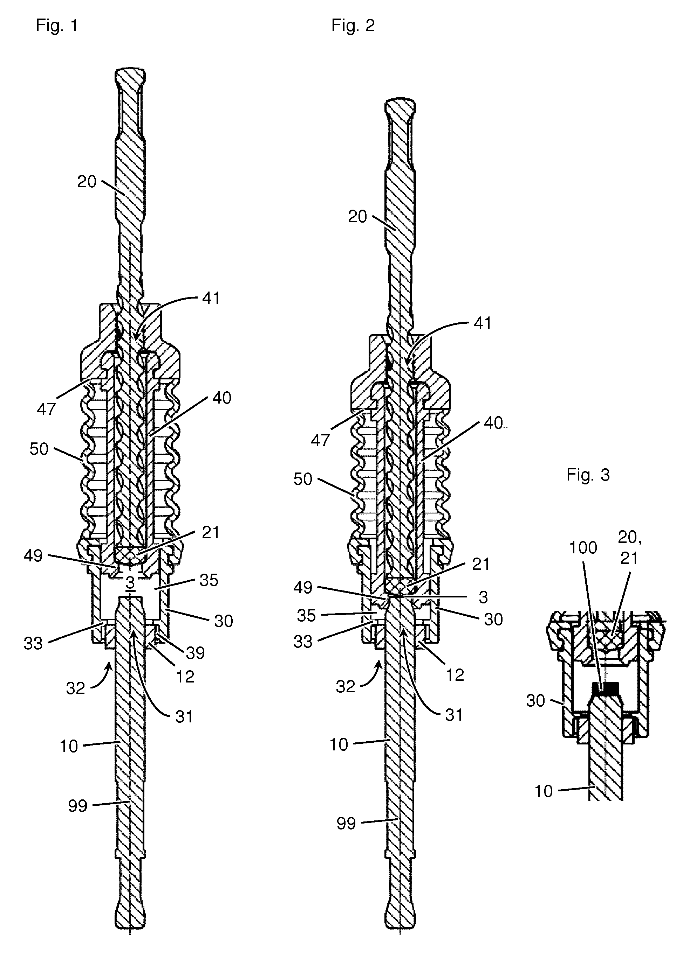

Ein erstes Ausführungsbeispiel einer erfindungsgemässen Befestigungsanordnung mit einem erfindungsgemässen Setzwerkzeug ist in den Figuren 1 und 2 dargestellt. Die Befestigungsanordnung weist ein Setzwerkzeug, einen Bohrer 20 mit einer vorderseitigen Spitze 21, und eine Ankerstange 10 auf, wobei die Ankerstange 10 in ihrem rückwärtigen Endbereich eine auf die Ankerstange 10 aufgeschraubte Mutter 12 aufweist.

Das Setzwerkzeug weist in seinem vorderen Bereich ein als Hülse ausgebildetes Mutternhalteelement 30 auf. An der vorderen Stirnseite des Mutternhalteelements 30 ist eine nach vorne offene, topfförmige Mutternaufnahme 32 vorgesehen, in welcher die an der Ankerstange 10 angeordnete Mutter 12 drehfest aufgenommen ist. Zur drehfesten Kopplung mit dem Mutternhalteelement 30 kann die Mutternaufnahme 32 beispielsweise eine Innenmehrkantstruktur 39 aufweisen. Nach hinten hin wird die topfförmige Mutternaufnahme 32 von einem ringförmigen Boden 33 begrenzt, der einen axialen Anschlag für die Mutter 12 bildet. Im ringförmigen Boden 33 ist eine Ausnehmung vorgesehen, welche eine Ankerstangenaufnahme 31 bildet, und durch welche das rückwärtige Ende der die Mutter 12 tragenden Ankerstange 10 in das Setzwerkzeug eingeschoben ist. Auf ihrer der Mutternaufnahme 32 entgegengesetzten Rückseite weist das Mutternhalteelement 30 einen weiter unten im Detail erläuterten topfförmigen, nach hinten hin offenen Aufnahmeraum 35 auf.

Das Setzwerkzeug weist ferner eine Bohrerhülse 40 auf, in der eine zur rückwärtigen Seite des Setzwerkzeugs hin offene, etwa zylindrische Bohreraufnahme 41 ausgebildet ist. In diese Bohreraufnahme 41 ist der als Wendelbohrer ausgebildete Bohrer 20 eingesteckt ist. An ihrem vorderen, das heisst an ihrem der Ankerstangenaufnahme 31 zugewandten Endbereich weist die Bohrerhülse 40 eine beispielsweise ringförmige Innenquerschnittsverengung 49 auf. Diese Innenquerschnittsverengung 49 bildet einen axialen Anschlag für den in der Bohreraufnahme 41 aufgenommenen Bohrer 20, insbesondere für dessen Spitze 21, wobei der axiale Anschlag eine Bewegung des Bohrers 20 relativ zur Bohrerhülse 40 nach vorne hin begrenzt. Die Innenquerschnittsverengung 49 bildet, wie insbesondere in Figur 2 erkennbar ist, auch eine Führung für das rückwärtige Ende der in der Ankerstangenaufnahme 31 angeordneten Ankerstange 10.

Der Bohrer 20, die Bohreraufnahme 41, die Ankerstange 10 und die Ankerstangenaufnahme 31 sind koaxial angeordnet und definieren eine gemeinsame Längsachse 99.

Die Bohrerhülse 40 ist in ihrem vorderen Endbereich, vorzugsweise auf Höhe der Innenquerschnittsverengung 49, im rückwärtigen Aufnahmeraum 35 des Mutternhalteelements 30 aufgenommen und teleskopartig in das Mutternhalteelement 30 einschiebbar.

Das Setzwerkzeug weist ferner einen Faltenbalg 50 auf, der die Bohrerhülse 40 bereichsweise umgibt. Der Faltenbalg 50 stützt sich an seinem vorderen Ende am Mutternhalteelement 30 und an seinem hinteren Ende an einer axial fest an der Bohrerhülse 40 angeordneten Ringschulter 47 ab. Die Bohreraufnahme 41 verläuft durch diese Ringschulter 47 hindurch. Im vorliegenden Ausführungsbeispiel ist die Bohrerhülse mehrteilig mit einem aussendurchmesserkleinen vorderen Element, welches in den Aufnahmeraum 35 ragt, und einem aussendurchmessergrossen rückwärtigen Element, an dem die Ringschulter 47 gebildet ist, ausgeführt. Es ist aber auch eine einteilige Ausführung möglich. Im vorliegenden Ausführungsbeispiel weist die Wand des Faltenbalgs 50 im Längsschnitt eine sinusartige Wellenstruktur auf. Es sind aber auch andere Wandformen möglich.

Der Aufnahmeraum 35 des Mutternhalteelements 30 und die Innenquerschnittsverengung 49 bilden einen Durchgang 3, durch den der in der Bohreraufnahme 41 aufgenommene Bohrer 20 mit seiner vorderseitigen Spitze 21 unmittelbar axial schlagend auf die rückwärtige Stirnseite der in der Ankerstangenaufnahme 31 angeordneten Ankerstange wirken kann.

Die Figur 1 zeigt den Zustand des Setzwerkzeuges vor dem eigentlichen Setzvorgang, aber nachdem die Ankerstange 10 und der Bohrer 20 bereits in die entsprechenden Aufnahmen 31 beziehungsweise 41 eingeführt worden sind. In diesem Zustand ist der Bohrer 20 noch von der Ankerstange 10 beabstandet. Nachdem der in Figur 1 gezeigte Zustand eingenommen ist, wird der Bohrer 20 so lange axial zum rückwärtigen Ende der Ankerstange 10 hin nach vorne bewegt, bis der Bohrer 20 durch den Durchgang 3 hindurch am rückwärtigen Ende der Ankerstange 10 anliegt. Die Bohrerhülse 40 wird dabei von dem an der Innenquerschnittsverengung 49 anliegenden Bohrer 20 axial in den Aufnahmeraum 35 des von der Mutter 12 und dem Boden 33 axial fixierten Mutternhalteelements 30 eingeschoben, wobei der Faltenbalg 50 unter Speicherung von Energie radial einfedert. Der resultierende Zustand ist in Figur 2 gezeigt. In diesem Zustand können in den Bohrer 20 eingebrachte Stossimpulse vom Bohrer 20 unmittelbar auf die am Bohrer 20 anliegende Ankerstange 10 weitergegeben werden. Die Stossimpulse können vorzugsweise am rückwärtigen Endbereich des Bohrers 20 eingebracht werden, beispielsweise von einem nicht dargestellten Antrieb, der am rückwärtigen, das heisst an dem der Spitze 21 gegenüberliegenden, Endbereich des Bohrers 20 angeordnet ist.

Eine weitere Ausführungsform einer erfindungsgemässen Befestigungsanordnung ist in Figur 3 gezeigt. Sie unterschiedet sich von der zuvor gezeigten Ausführungsform lediglich dadurch, dass die Ankerstange 10 gemäss Figur 3 an ihrem rückwärtigen, dem Bohrer 20 zugewandten Endbereich eine zusätzliche Schutzkappe 100, beispielsweise aus Kunststoff, aufweist. Diese Schutzkappe 100 deckt insbesondere die rückwärtige Stirnseite der Ankerstange 10 ab, gegen welche der Bohrer 20 schlagend wirkt, und schützt somit die rückwärtige Stirnseite. Die übrigen Merkmale entsprechen der Ausführungsform der Figuren 1 und 2, so dass insoweit auf die entsprechenden Ausführungen verwiesen wird.

## Patentansprüche

1. Setzwerkzeug mit
einer zu einer vorderen Seite des Setzwerkzeugs hin offenen Ankerstangenaufnahme (31) und
einer zu einer rückwärtigen Seite des Setzwerkzeugs hin offenen Bohreraufnahme (41),
**dadurch gekennzeichnet,**
**dass** das Setzwerkzeug einen Durchgang (3) aufweist, durch den eine in der Ankerstangenaufnahme (31) aufgenommene Ankerstange (10) mit einem in der Bohreraufnahme (41) aufgenommenen Bohrer (20) unmittelbar axial schlagend beaufschlagbar ist.

2. Setzwerkzeug nach Anspruch 1,
**dadurch gekennzeichnet,**
**dass** es eine Bohrerhülse (40) aufweist, in welcher die Bohreraufnahme (41) ausgebildet ist, wobei die Bohrerhülse (40) eine Innenquerschnittsverengung (49) als axialen Anschlag für den in der Bohreraufnahme (41) aufgenommenen Bohrer (20) und/oder als Führung für ein rückwärtiges Ende der Ankerstange (10) aufweist.

3. Setzwerkzeug nach einem der vorstehenden Ansprüche,
**dadurch gekennzeichnet,**
**dass** es ein Mutternhalteelement (30) aufweist, in welchem eine Mutternaufnahme (32) zum drehfesten Aufnehmen einer auf die Ankerstange (10) aufgeschraubten Mutter (12) ausgebildet ist,
wobei die Mutternaufnahme (32) einen Boden (33) aufweist, welcher einen axialen Anschlag für die Mutter (12) bildet, und
wobei die Ankerstangenaufnahme (31) im Boden (33) der Mutternaufnahme (32) ausgebildet ist.

4. Setzwerkzeug nach Anspruch 2 und 3,
**dadurch gekennzeichnet,**
**dass** das Mutternhalteelement (30) und die Bohrerhülse (40) axial zueinander verschiebbar aneinander befestigt sind.

5. Setzwerkzeug nach Anspruch 2 und 3,
**dadurch gekennzeichnet,**
**dass** das Mutternhalteelement (30) und die Bohrerhülse (40) ineinanderschiebbar sind, wobei die Bohrerhülse (40) im Inneren des Mutternhalteelements (30) angeordnet ist.

6. Setzwerkzeug nach Anspruch 5,
**dadurch gekennzeichnet,**
**dass** es einen Faltenbalg (50) aufweist, welcher einerseits an der Bohrerhülse (40) und andererseits am Mutternhalteelement (30) angeordnet ist.

7. Setzwerkzeug nach Anspruch 6,
**dadurch gekennzeichnet,**
**dass** sich der Faltenbalg (50) einerseits an der Bohrerhülse (40) und andererseits am Mutternhalteelement (30) abstützt, und/oder
**dass** der Faltenbalg (50) eine Druckfeder bildet, welche beim Ineinanderschieben von Mutternhalteelement (30) und Bohrerhülse (40) Energie speichert.

8. Setzwerkzeug nach einem der Ansprüche 6 oder 7,
**dadurch gekennzeichnet,**
**dass** an der Bohrerhülse (40) eine Ringschulter (47) vorgesehen ist, an der sich der Faltenbalg (50) abstützt.

9. Setzwerkzeug nach einem der vorstehenden Ansprüche,
**dadurch gekennzeichnet,**
**dass** die Ankerstangenaufnahme (31) und die Bohreraufnahme (41) koaxial angeordnet sind.

10. Befestigungsanordnung mit
- einem Setzwerkzeug nach einem der vorstehenden Ansprüche,
- einer Ankerstange (10), welche in der Ankerstangenaufnahme (31) des Setzwerkzeugs angeordnet ist, und
- einem Bohrer (20), welcher in der Bohreraufnahme (41) des Setzwerkzeugs angeordnet ist.

11. Setzwerkzeug nach Anspruch 10,
**dadurch gekennzeichnet,**
**dass** der Bohrer (20) und die Ankerstange (10) zumindest annähernd durchmessergleich sind.
